# EUROPEAN PATENT APPLICATION

(11) **EP 4 656 699 A1**
(43) Date of publication of application: **03.12.2025**
(21) Application number: 23918662.0
(22) Date of filing: 25.12.2023
(51) Int. Cl.: C09J 167/04, B32B 7/12, B32B 27/00, C09J 5/00, C09J 7/35

(54) **COMPOSITION FOR HOT MELT ADHESIVE, AND METHOD FOR PRODUCING LAYERED PRODUCT**

(30) Priority: 27.01.2023 JP 2023011139
(71) Applicant: Kaneka Corporation, Osaka-shi, Osaka 530-8288 (JP)
(72) Inventor: YOKOTA, Daichi, Settsu-shi, Osaka 566-0072 (JP); TANAKA, Hidenori, Settsu-shi, Osaka 566-0072 (JP)
(74) Representative: Vossius & Partner Patentanwälte Rechtsanwälte mbB
(86) International application number: PCT/JP2023/046490
(87) International publication number: WO 2024/157708

(57) **Abstract**

An object is to provide a composition for a hot melt adhesive which composition contains a P3HA-based resin and has a low melt viscosity and an excellent elongation at break. The object is attained by a composition for a hot melt adhesive, containing a poly(3-hydroxyalkanoate)-based resin (A) in which a content of a poly(3-hydroxybutyrate) unit is not less than 50 mol% and a content of an amorphous hydroxyalkanoate unit is not less than 24 mol%.

## Description

### Technical Field

The present invention relates to a composition for a hot melt adhesive, and a method for producing a laminated body.

### Background Art

In recent years, in order to prevent environmental destruction caused by plastic waste, it has been proposed to use biodegradable resins, which have a low environmental impact, as alternative materials to plastics. For example, Patent Literature 1 discloses a hot melt adhesive in which a biodegradable resin is used.

Among biodegradable resins, poly(3-hydroxyalkanoate) (hereinafter, may also be referred to as "P3HA"), which is a resin derived from a plant material, has been attracting attention from the viewpoints of excellent biodegradability and carbon neutrality. For example, Patent Literature 2 discloses coated paper in which a P3HA-based resin is used as a biodegradable resin.

### Citation List

### [Patent Literature]

[Patent Literature 1]
   Japanese Patent Application Publication No. 2021-102775
[Patent Literature 2]
   Japanese Patent Application Publication No. 2021-195717

### Summary of Invention

### Technical Problem

The inventors of the present invention conducted diligent study on P3HA-based resin-containing compositions for a hot melt adhesive, in order to provide a hot melt adhesive having a reduced environmental impact. In the course of the study, the inventors of the present invention discovered that the P3HA-based resin-containing compositions for a hot melt adhesive were inadequate in terms of melt viscosity and elongation at break, and that there was room for improvement in this regard.

In light of the circumstances, it is an object of an embodiment of the present invention to provide a composition for a hot melt adhesive which composition contains a P3HA-based resin and has a low melt viscosity and an excellent elongation at break.

### Solution to Problem

As a result of diligent study in order to attain the object, the inventors of the present invention have completed the present invention.

Specifically, a composition in accordance with an embodiment of the present invention for a hot melt adhesive is a composition that contains a poly(3-hydroxyalkanoate)-based resin (A) in which a content of a poly(3-hydroxybutyrate) unit is not less than 50 mol% and a content of an amorphous hydroxyalkanoate unit is not less than 24 mol%.

### Advantageous Effects of Invention

According to an embodiment of the present invention, it is possible to provide a composition for a hot melt adhesive which composition contains a P3HA-based resin and has a low melt viscosity and an excellent elongation at break.

### Description of Embodiments

The following description will discuss an embodiment of the present invention, but the present invention is not limited to this. The present invention is not limited to the configurations described below, but may be altered in various ways within the scope of the claims. The present invention also encompasses, in its technical scope, any embodiment or example derived by combining technical means disclosed in respective differing embodiments or Examples. Further, it is possible to form a new technical feature by combining technical means disclosed in the respective embodiments. All of the academic and patent literatures cited in the present specification are incorporated herein by reference. Any numerical range expressed as "A to B" in the present specification means "not less than A and not more than B (i.e., a range from A to B which includes both A and B)" unless otherwise stated.

In the present specification, a repeating unit derived from an X monomer may be referred to as an "X unit". A repeating unit may also be referred to as a structural unit.

### [1. Technical idea of an embodiment of the present invention]

While conducting diligent study on P3HA-based resin-containing compositions for a hot melt adhesive, the inventors of the present invention found that the P3HA-based resin-containing compositions for a hot melt adhesive have an excessively high melt viscosity, so that it was difficult to coat a base material with the hot melt adhesive.

As such, in order to reduce a melt viscosity of a P3HA-based resin-containing composition for a hot melt adhesive, the inventors of the present invention attempted to further add a tackifier (an adhesiveness-imparting agent) to the hot melt adhesive. As a result, the inventors of the present invention discovered that in a case where the tackifier was added to the P3HA-based resin-containing composition for a hot melt adhesive, the melt viscosity was reduced, but a new problem arose that the elongation at break was drastically reduced.

As a result of the above research, the inventors of the present invention concluded that, it would be difficult, with mere addition of a tackifier and the like, to provide a P3HA-based resin-containing composition for a hot melt adhesive having a low melt viscosity and an excellent elongation at break. As such, the inventors of the present invention newly conducted diligent study on a P3HA-based resin contained in a composition for a hot melt adhesive.

Note here that the P3HA-based resin used is ordinarily a copolymer containing a crystalline structural unit such as 3-hydroxybutyrate or 3-hydroxyvalerate and an amorphous structural unit such as 3-hydroxyhexanoate. In particular, P3HA-based resins that are widely used are copolymers in which a ratio of an amorphous structural unit is approximately 3 mol% to 15 mol%.

As a result of diligent study on a P3HA-based resin contained in a composition for a hot melt adhesive, the inventors of the present invention made a unique discovery that a composition for a hot melt adhesive which composition contained a P3HA-based resin having a higher ratio of an amorphous structural unit than the commonly used P3HA-based resins, i.e., a P3HA-based resin in which a content of an amorphous structural unit was not less than 24 mol%, was able to provide a hot melt adhesive having a low melt viscosity and an excellent elongation at break. On the basis of the discovery, the inventors of the present invention have completed the present invention.

A composition in accordance with an embodiment of the present invention for a hot melt adhesive contains a P3HA-based resin having excellent biodegradability, and therefore can reduce the environmental impact. This can contribute to the achievement of the Sustainable Development Goals (SDGs), such as Goal 12 "Ensure sustainable consumption and production patterns" and Goal 14 "Conserve and sustainably use the oceans and marine resources for sustainable development".

### [2. Composition for hot melt adhesive]

A composition in accordance with an embodiment of the present invention for a hot melt adhesive (may hereinafter be referred to as "the present composition for an adhesive") contains a P3HA (poly(3-hydroxyalkanoate))-based resin (A) in which a content of a poly(3-hydroxybutyrate) unit is not less than 50 mol% and a content of an amorphous hydroxyalkanoate unit is not less than 24 mol%.

Due to having the above configuration, the present composition for an adhesive has the advantage of a low melt viscosity and an excellent elongation at break.

The following describes each component that may be contained in the present composition for an adhesive.

### (2-1. P3HA-based resin (A))

The present composition for an adhesive contains a P3HA-based resin (A) (hereinafter, may also be referred to as a "component (A)"). The component (A) is a P3HA-based resin in which a content of a poly(3-hydroxybutyrate) unit is not less than 50 mol% and a content of an amorphous hydroxyalkanoate unit is not less than 24 mol%.

In the present specification, a P3HA-based resin refers to a polymer having a 3-hydroxyalkanoate unit as an essential structural unit (monomer unit). In the present specification, "3-hydroxyalkanoate" may also be referred to as "3HA". Specifically, the P3HA-based resin is preferably a polymer containing a repeating unit represented by the following general formula (1):

[-CHR-CH₂-CO-O-] ... (1).

In general formula (1), R represents an alkyl group represented by CₙH₂ₙ₊₁, where n represents an integer of 1 to 15. Examples of R include a linear or branched alkyl group such as a methyl group, an ethyl group, a propyl group, an isopropyl group, a butyl group, an isobutyl group, a t-butyl group, a pentyl group, and a hexyl group. n is preferably 1 to 10, and more preferably 1 to 8.

Examples of the 3HA unit include a 3-hydroxybutyrate (hereinafter, may also be referred to as "3HB") unit, a 3-hydroxyhexanoate (hereinafter, may also be referred to as "3HH") unit, and a 3-hydroxyvalerate unit. Further, the P3HA-based resin that serves as the component (A) may also contain a repeating unit derived from a monomer other than 3HA (e.g., a 4-hydroxyalkanoate unit or the like) in addition to the 3HA unit.

The component (A) is preferably a 3HB-based polymer, since the 3HB-based polymer has the advantage of excellent initial fixation when used as a composition for a hot melt adhesive. In the present specification, a 3HB-based polymer refers to a P3HA-based resin that contains not less than 50 mol% of a 3HB unit out of 100 mol% of all repeating units.

As such, the component (A) is preferably a P3HA-based resin containing not less than 50 mol% of the 3HB unit out of 100 mol% of all repeating units, more preferably a P3HA-based resin containing not less than 60 mol% of the 3HB unit out of 100 mol% of all repeating units, even more preferably a P3HA-based resin containing not less than 70 mol% of the 3HB unit out of 100 mol% of all repeating units, and even more preferably a P3HA-based resin containing not less than 75 mol% of the 3HB unit out of 100 mol% of all repeating units.

The component (A) is preferably a P3HA-based resin containing not less than 24 mol% of an amorphous hydroxyalkanoate unit out of 100 mol% of all repeating units, more preferably a P3HA-based resin containing not less than 25 mol% of an amorphous hydroxyalkanoate unit out of 100 mol% of all repeating units, even more preferably a P3HA-based resin containing more than 25 mol% of an amorphous hydroxyalkanoate unit out of 100 mol% of all repeating units, and still even more preferably a P3HA-based resin containing not less than 26 mol% of an amorphous hydroxyalkanoate unit out of 100 mol% of all repeating units. A composition for a hot melt adhesive which composition contains a P3HA-based resin containing not less than 24 mol% of an amorphous (low crystallinity) hydroxyalkanoate unit is a composition for a hot melt adhesive which composition has a low melt viscosity, an excellent coatability, and an excellent elongation at break. An upper limit of the content of the amorphous hydroxyalkanoate unit in the component (A) is not particularly limited, but from the viewpoint of the initial fixation of the obtained hot melt adhesive, the upper limit is preferably not more than 50 mol%, more preferably not more than 40 mol%, out of 100 mol% of all repeating units.

Examples of the amorphous hydroxyalkanoate include 3HH, 3-hydroxyheptanoate, and 3-hydroxyoctanoate. Among these, 3HH is preferable as the amorphous hydroxyalkanoate because of being excellent in productivity. In other words, the amorphous hydroxyalkanoate unit contained in the component (A) is preferably a 3HH unit.

The ratio of each monomer unit in the P3HA-based resin can be determined by a method known to a person skilled in the art, for example, a method described in International Publication No. WO 2013/147139.

A weight average molecular weight of the component (A) is preferably 20,000 to 1,500,000, more preferably 100,000 to 1,000,000, and even more preferably 150,000 to 800,000. By using a P3HA-based resin having a weight average molecular weight of not less than 20,000 as the component (A), it is possible to provide a composition for a hot melt adhesive which composition has a more excellent elongation at break and excellent adhesive properties. By using a P3HA-based resin having a weight average molecular weight of not more than 1,500,000 as the component (A), it is possible to provide a composition for a hot melt adhesive which composition has a lower melt viscosity and a more excellent coatability.

The weight-average molecular weight of the P3HA-based resin can be measured from a polystyrene equivalent molecular weight distribution by gel permeation chromatography (HPLC GPC system manufactured by Shimadzu Corporation) with use of a chloroform solution. As a column for the gel permeation chromatography, a known column suitable for measuring a weight-average molecular weight can be used.

In a case where the P3HA-based resin contains two or more types of repeating units, a monomer from which a repeating unit other than the repeating unit that is contained in the largest amount is derived is referred to as a comonomer. In the present specification, a "repeating unit derived from a comonomer" may also be referred to as a "comonomer unit". The component (A) is preferably a P3HA-based resin containing a 3HH unit as a comonomer unit.

Specific examples of the P3HA-based resin serving as the component (A) include poly(3-hydroxybutyrate-co-3-hydroxyhexanoate) (hereinafter, may also be referred to as "PHBH") and poly(3-hydroxybutyrate-co-3-hydroxyvalerate-3-hydroxyhexanoate). Among these, PHBH is preferable as the component (A) from the viewpoint of productivity. As the component (A), one type of P3HA-based resin may be used alone, or two or more types of P3HA-based resins may be used in combination.

In a case where PHBH is used as the component (A), a ratio of a 3HB unit to a 3HH unit (3HB unit/3HH unit) in 100 mol% of all repeating units in the component (A) is preferably 76/24 (mol%/mol%) to 60/40 (mol%/mol%), and more preferably 75/25 (mol%/mol%) to 70/30 (mol%/mol%).

As the component (A), a P3HA-based resin derived from a petroleum resource may be used, or a P3HA-based resin produced from a microorganism may be used, provided that a content of a 3HB unit is not less than 50 mol% and a content of an amorphous hydroxyalkanoate unit is not less than 24 mol%. From the viewpoint of reducing the environmental impact, however, it is preferable to use a P3HA-based resin produced from a microorganism.

Examples of a method for producing the P3HA-based resin include methods known to a person skilled in the art, such as a method of chemical synthesis and a method using a microorganism. From the perspective of reducing the environmental impact, production with use of a microorganism is preferable.

Examples of a microorganism (a P3HA-based resin-producing bacterium) capable of producing the P3HA-based resin serving as the component (A) include *Aeromonas caviae,* which is a PHBH-producing bacterium. In particular, with regard to PHBH, it is more preferable to use *Alcaligenes eutrophus* AC32 (FERM BP-6038) (T. Fukui, Y. Doi, J. Bateriol., 179, pp. 4821-4830 (1997)), which has an improved productivity of PHBH due to having genes of a P3HA synthesis enzyme group introduced therein. By culturing these P3HA-based resin-producing bacteria under appropriate conditions and accumulating a P3HA-based resin within the bacterial cells, it is possible to produce the P3HA-based resin. With regard to the P3HA-based resin-producing bacteria, apart from the above, genetically modified microorganisms into which various P3HA synthesis-related genes have been introduced may be used, depending on the desired P3HA-based resin.

With regard to conditions under which a P3HA-based resin-producing bacterium is cultured, various culture conditions, including a type of substrate, can be optimized to suit the desired P3HA-based resin. Note that as a specific method for culturing a P3HA-based resin-producing bacterium, for example, a method described in International Publication No. WO2019/142717 can be used.

An amount of the component (A) contained in the present composition for an adhesive is not particularly limited. For example, the amount is preferably not less than 50% by weight, may be not less than 60% by weight, may be not less than 70% by weight, may be not less than 80% by weight, may be not less than 90% by weight, or may be 100% by weight, with respect to 100% by weight as a total amount of the present composition for an adhesive. In other words, the present composition for an adhesive may consist only of the component (A). In other words, the present composition for an adhesive preferably contains 50% by weight to 100% by weight of the component (A), may contain 60% by weight to 100% by weight of the component (A), may contain 70% by weight to 100% by weight of the component (A), may contain 80% by weight to 100% by weight of the component (A), or may contain 90% by weight to 100% by weight of the component (A), with respect to 100% by weight as a total amount of the present composition for an adhesive.

### (2-2. Tackifier (B))

The present composition for an adhesive preferably contains a tackifier (B) (hereinafter, may also be referred to as a "component (B)"). In a case where the present composition for an adhesive contains the tackifier (B), it is possible to provide a composition for a hot melt adhesive which composition has a lower melt viscosity. A tackifier may also be referred to as a tackifier resin.

Examples of the component (B) include petroleum resin-based (such as aliphatic, alicyclic, or aromatic) tackifiers, terpene resin (a polymer of α-pinene, β-pinene, limonene, or the like)-based tackifiers, aromatic modified terpene resin-based tackifiers, rosin-based (based on rosin such as gum rosin, tall oil rosin, wood rosin, hydrogenated rosin, disproportionated rosin, polymerized rosin, or maleated rosin; rosin ester-based; rosinol-based; or the like) tackifiers, and terpene phenol resin-based tackifiers. As the component (B), one of these tackifiers may be used alone, or two of these tackifiers may be used in combination.

Among the above tackifiers, the rosin-based tackifiers are preferable as the component (B) because of having excellent miscibility with the component (A).

From the viewpoint of providing a composition for a hot melt adhesive which composition has a smaller environmental impact, the component (B) is preferably a tackifier that is not less than 60% biomass derived, more preferably a tackifier that is not less than 70% biomass derived, and even more preferably a tackifier that is not less than 80% biomass derived. The degree by which the component (B) is biomass derived is preferably as high as possible, and may be 100%.

An amount of the component (B) contained in the present composition for an adhesive is not particularly limited, but is preferably not less than 10 parts by weight, more preferably not less than 20 parts by weight, and even more preferably not less than 30 parts by weight, with respect to 100 parts by weight of the component (A). In a case where the present composition for an adhesive contains not less than 10 parts by weight of the component (B) with respect to 100 parts by weight of the component (A), a melt viscosity reducing effect of the component (B) is sufficiently exhibited. This makes it possible to provide a composition for a hot melt adhesive which composition has a lower melt viscosity. An upper limit of the amount of the component (B) contained is preferably not more than 70 parts by weight, more preferably not more than 60 parts by weight, and even more preferably not more than 50 parts by weight. In a case where the amount of the component (B) contained in the present composition for an adhesive is set to not more than 70 parts by weight with respect to 100 parts by weight of the component (A), it is possible to provide a composition for a hot melt adhesive which composition has a more excellent elongation at break. In other words, the present composition for an adhesive preferably contains 10 parts by weight to 70 parts by weight of the component (B), more preferably 20 parts by weight to 60 parts by weight of the component (B), and even more preferably 30 parts by weight to 50 parts by weight of the component (B), with respect to 100 parts by weight of the component (A).

### (2-3. Wax (C))

The present composition for an adhesive preferably contains a wax (C) (hereinafter, may also be referred to as a "component (C)"). In a case where the present composition for an adhesive contains the wax (C), it is possible to provide a composition for a hot melt adhesive which composition has a lower melt viscosity.

Examples of the component (C) include animal-derived or plant-derived waxes such as beeswax and carnauba wax; mineral-derived waxes such as microcrystalline wax; petroleum waxes; and synthetic waxes, such as polyethylene wax, paraffin wax, and polyester wax. As the component (C), one of these waxes may be used alone, or two of these waxes may be used in combination.

Among the waxes listed above, the animal-derived or plant-derived waxes are preferable as the component (C) because of having excellent miscibility with the component (A).

From the viewpoint of providing a composition for a hot melt adhesive which composition has a smaller environmental impact, the component (C) is preferably a wax that is not less than 90% biomass derived, and more preferably a wax that is not less than 95% biomass derived. The degree by which the component (C) is biomass derived is preferably as high as possible, and may be 100%.

An amount of the component (C) contained in the present composition for an adhesive is not particularly limited, but is preferably not less than 5 parts by weight, and more preferably not less than 7.5 parts by weight, with respect to 100 parts by weight of the component (A). In a case where the present composition for an adhesive contains not less than 5 parts by weight of the component (C) with respect to 100 parts by weight of the component (A), a melt viscosity reducing effect of the component (C) is sufficiently exhibited. This makes it possible to provide a composition for a hot melt adhesive which composition has a lower melt viscosity. An upper limit of the amount of the component (C) contained is preferably not more than 15 parts by weight, and more preferably not more than 10 parts by weight. In a case where the amount of the component (C) contained in the present composition for an adhesive is set to not more than 15 parts by weight with respect to 100 parts by weight of the component (A), it is possible to provide a composition for a hot melt adhesive which composition has a more excellent elongation at break. In other words, the present composition for an adhesive preferably contains 5 parts by weight to 15 parts by weight of the component (C), and more preferably 7.5 parts by weight to 10 parts by weight of the component (C), with respect to 100 parts by weight of the component (A).

### (2-4. Plasticizer (D))

The present composition for an adhesive preferably contains a plasticizer (D) (hereinafter, may also be referred to as a "component (D)"). In a case where the present composition for an adhesive contains the plasticizer (D), it is possible to provide a composition for a hot melt adhesive which composition has a lower melt viscosity.

Examples of the component (D) include polyhydric alcohols such as propylene glycol and polyglycerin; polyhydric alcohol esters such as glycerin ester, glycerin ester monoglyceride, and polyglycerin fatty acid esters; polyvalent carboxylic acid esters such as dialkyl adipates; phthalic acid esters such as dioctyl phthalate and dibutyl phthalate; and epoxidized vegetable oils such as epoxidized soybean oil. As the component (D), one of these plasticizers may be used alone, or two of these plasticizers may be used in combination.

Among the plasticizers listed above, the epoxidized vegetable oils are preferable as the component (D) because of having excellent miscibility with the component (A).

From the viewpoint of providing a composition for a hot melt adhesive which composition has a smaller environmental impact, the component (D) is preferably a plasticizer that is not less than 75% biomass derived, more preferably a plasticizer that is not less than 80% biomass derived, and even more preferably a plasticizer that is not less than 90% biomass derived. The degree by which the component (D) is biomass derived is preferably as high as possible, and may be 100%.

An amount of the component (D) contained in the present composition for an adhesive is not particularly limited, but is preferably not less than 1 part by weight, and more preferably not less than 5 parts by weight, with respect to 100 parts by weight of the component (A). In a case where the present composition for an adhesive contains not less than 5 parts by weight of the component (D) with respect to 100 parts by weight of the component (A), a melt viscosity reducing effect of the component (D) is sufficiently exhibited. This makes it possible to provide a composition for a hot melt adhesive which composition has a lower melt viscosity. An upper limit of the amount of the component (D) contained is preferably not more than 50 parts by weight, more preferably not more than 30 parts by weight, and even more preferably not more than 15 parts by weight. In a case where the amount of the component (D) contained in the present composition for an adhesive is set to not more than 50 parts by weight with respect to 100 parts by weight of the component (A), it is possible to provide a composition for a hot melt adhesive which composition has a more excellent elongation at break. In other words, the present composition for an adhesive preferably contains 10 parts by weight to 50 parts by weight of the component (D), more preferably 5 parts by weight to 30 parts by weight of the component (D), and even more preferably 5 parts by weight to 15 parts by weight of the component (D), with respect to 100 parts by weight of the component (A).

### (Other additive(s))

The present composition for an adhesive may further contain, in addition to the component (A), an additive (another additive/other additives) other than the components (B) to (D). As the another additive/other additives, it is possible to use, depending on the purpose, for example, (i) a resin other than the component (A), (ii) a stabilizer such as an antioxidant, a metal deactivator, a phosphorus-based processing stabilizer, an ultraviolet absorber, an ultraviolet stabilizer, a fluorescent brightener, soap scum, and an antacid adsorbent, or (iii) a crosslinking agent, a chain transfer agent, a nucleating agent, a lubricant, a plasticizer, a filler, a reinforcer, a pigment, a dye, a flame retardant, an antistatic agent, and/or the like. The additive is particularly preferably an additive having biodegradability.

Examples of the resin other than the component (A) (may also be referred to as "another resin component") include (a) a P3HA-based resin (including a P3HA-based resin containing no 3HH unit, such as poly(3-hydroxybutyrate), poly(3-hydroxybutyrate-co-3-hydroxypropionate), and poly(3-hydroxybutyrate-co-3-hydroxyvalerate)) in which a content of a 3HB unit is less than 50 mol% or a content of an amorphous hydroxyalkanoate unit is less than 24 mol%, (b) an aliphatic polyester such as polylactic acid, polybutylene succinate, polybutylene succinate adipate, polybutylene adipate terephthalate, polybutylene succinate terephthalate, and polycaprolactone, (c) an aliphatic aromatic polyester, and (d) a polyolefin-based resin.

In a case where the present composition for an adhesive contains the another resin, an amount of the another resin contained is not particularly limited as long as the effects of an embodiment of the present invention are not impaired. However, the amount is preferably not more than 150 parts by weight, and more preferably not more than 100 parts by weight, with respect to 100 parts by weight of the component (A). From the viewpoint of providing a composition for a hot melt adhesive which composition has a lower melt viscosity and a more excellent elongation at break, it is preferable that the present composition for an adhesive do not contain the another resin.

### (Method for producing the present composition for an adhesive)

The method for producing the present composition for an adhesive is not particularly limited as long as the above-described components can be mixed uniformly, but from the viewpoint of ease of uniform mixing, a method of melt-kneading the above-described components is preferable. As a device for the melt-kneading, a known melt-kneading device such as a single-screw or multi-screw extruder, a Banbury mixer, a plastomill, a heated roll kneader, and the like can be used. In order to mix the components more uniformly, the melt-kneading may be repeated a plurality of times.

### (Uses of the present composition for an adhesive)

The present composition for an adhesive can be suitably used as a hot melt adhesive, in particular as a hot melt adhesive for assembling hygienic materials, sealing cardboard boxes, sealing cartons (paper boxes), bookbinding, lamination, construction, and straw attachment for beverage packages.

### [3. Laminated body]

In an embodiment of the present invention, a laminated body is provided which includes a first base material, an adhesive layer consisting of the present composition for an adhesive, and a second base material, the first base material, the adhesive layer, and the second base material being laminated in this order. The laminated body in accordance with an embodiment of the present invention (hereinafter, may also be referred to as "the present laminated body") can also be said to be a laminated body in which the first base material and the second base material are bonded via the present composition for an adhesive. Note that, for specific aspects of the present composition for an adhesive in the present laminated body, the description in the above section [2. Composition for hot melt adhesive] is incorporated as appropriate.

The first base material and the second base material in the present laminated body are not particularly limited as long as they are materials that can be bonded by the present composition for an adhesive. Examples of each of the first base material and the second base material include: cellulose-based polymer materials such as paper, cotton, linen, cloth, and wood boards; polyolefin-based resins such as polypropylene and polyethylene; styrene-based resins such as polystyrene, a styrene-butadiene block copolymer (SBS resin), a styrene-acrylonitrile copolymer (AS resin), an acrylonitrile-ethylene/propylene-styrene copolymer (AES resin), and an acrylonitrile-butadiene-styrene copolymer (ABS resin); a polycarbonate-based resin (PC resin), (meth)acrylic resins, polyester-based resins, nylon, and polyamide-based resins such as polyurethane; synthetic polymer materials such as phenolic resins and epoxy resins; and metal materials such as gold, silver, copper, iron, tin, lead, and aluminum. The first base material and the second base material may each be a substrate consisting of one of these materials, or may each be a substrate consisting of a mixture or composite of two or more of these materials. The first base material and the second base material may be substrates made of the same material, or may be substrates made of respective different materials.

A shape of each of the first base material and the second base material is not particularly limited and may be, for example, a film-like shape, a sheet-like shape, a plate-like shape, a fibrous shape, or the like. The first base material and the second base material may be ones which have been subjected to a surface treatment such as surface modification using plasma or laser, surface oxidation, etching, and the like, as necessary.

Example applications of the present laminated body include hygienic materials, cardboard boxes, cartons (paper boxes), bookbinding, lamination materials, building materials, and straw attachments for beverage packages.

### (Method for producing laminated body)

The method for producing the present laminated body is not particularly limited as long as the method allows the production of the present laminated body. Suitable examples of the method include a method (hereinafter, may also be referred to as a "method A") that includes: a coating step of melting the present composition for an adhesive under heating and coating the first base material with the present composition for an adhesive; an affixation step of affixing a surface of the first base material and the second base material to each other which surface has been obtained by the coating step and is coated with the composition for an adhesive; and a bonding step of, after the affixation step, cooling the composition for an adhesive to bond the first base material and the second base material to each other.

The following description will discuss in detail specific aspects of the method in accordance with an embodiment of the present invention for producing a laminated body (may hereinafter be referred to as "the present production method"), with reference to the method A as an example.

### <Coating step>

In the coating step, the present composition for an adhesive is first melted under heating. Note that a method for heating the present composition for an adhesive is not particularly limited, and the composition can be heated using known equipment such as a heater or a hot melt coater. A heating temperature may be any temperature at which the present composition for an adhesive can be melted, and may be, for example, 80°C to 180°C.

In the coating step, a method for coating the first base material with the melted present composition for an adhesive is not particularly limited, and the coating can be performed using beads, a spray, a hot melt gun, a roll coater, or the like.

### <Affixation step>

In the affixation step, a method for affixing the surface of the first base material which surface has been coated with the present composition for an adhesive and the second base material to each other is not particularly limited, and methods such as vacuum forming and vacuum-pressure forming can be employed.

### <Bonding step>

In the bonding step, a method for cooling the present composition for an adhesive is not particularly limited, and for example, methods such as leaving the composition to stand still at room temperature can be employed.

According to the present laminated body and the present production method, the present composition for an adhesive is used to bond the first base material and the second base material to each other. This allows the first base material and the second base material to be bonded to each other efficiently with good operability, and further allows the state in which the first base material and the second base material are bonded to each other to be firmly maintained. Further, since the present composition for an adhesive used in the present laminated body and the present production method contains a biodegradable P3HA-based resin, the present laminated body and the present production method can also be suitably used as a laminated body and a method for producing a laminated body each having a reduced environmental impact.

### [3. Others]

An embodiment of the present invention may include features below.
<1> A composition for a hot melt adhesive, containing a poly(3-hydroxyalkanoate)-based resin (A) in which a content of a poly(3-hydroxybutyrate) unit is not less than 50 mol% and a content of an amorphous hydroxyalkanoate unit is not less than 24 mol%.
<2> The composition described in < 1 >, wherein the amorphous hydroxyalkanoate unit is a poly(3-hydroxyhexanoate) unit.
<3> The composition described in <1> or <2>, wherein the poly(3-hydroxyalkanoate)-based resin (A) is poly(3-hydroxybutyrate-co-3-hydroxyhexanoate).
<4> The composition described in any one of < 1 > to <3>, wherein the poly(3-hydroxyalkanoate)-based resin (A) has a weight average molecular weight of 20,000 to 1,000,000.
<5> The composition described in any one of < 1 > to <4>, further containing a tackifier (B).
<6> The composition described in <5>, wherein the tackifier (B) is a rosin-based tackifier.
<7> The composition described in <5> or <6>, wherein the tackifier (B) is contained in an amount of not more than 70 parts by weight relative to 100 parts by weight of the poly(3-hydroxyalkanoate)-based resin (A).
<8> The composition described in any one of < 1 > to <7>, further containing a wax (C).
<9> The composition described in <8>, wherein the wax (C) is contained in an amount of not more than 50 parts by weight with respect to 100 parts by weight of the poly(3-hydroxyalkanoate)-based resin (A).
<10> The composition described in any one of <1> to <9>, further containing a plasticizer (D).
<11> The composition described in <10>, wherein the plasticizer (D) is contained in an amount of not more than 50 parts by weight with respect to 100 parts by weight of the poly(3-hydroxyalkanoate)-based resin (A).
<12> A laminated body, including: a first base material; an adhesive layer consisting of a composition for a hot melt adhesive described in any one of <1> to <11>; and a second base material, the first base material, the adhesive layer, and the second base material being stacked in this order.
<13> A method for producing a laminated body, the method including: a coating step of melting a composition for a hot melt adhesive described in any one of <1> to <11> under heating and coating a first base material with the composition; an affixation step of affixing a surface of the first base material and a second base material to each other, the surface being obtained by the coating step and coated with the composition; and a bonding step of, after the affixation step, cooling the composition to bond the first base material and the second base material to each other.

### Examples

The following description will discuss the present invention in detail through Examples. However, the technical scope of the present invention is not limited to these Examples.

### [Materials]

The following substances were used in Examples and Comparative Examples.

### (Component (A))

A-1: PHBH (monomer ratio: 3HB/3HH = 73/27 (mol%/mol%), weight average molecular weight: 400,000)
A-2: PHBH (monomer ratio: 3HB/3HH = 73/27 (mol%/mol%), weight average molecular weight: 300,000)
A-3: PHBH (monomer ratio: 3HB/3HH = 73/27 (mol%/mol%), weight average molecular weight: 160,000)

### (Another resin)

P-1: PHBH (monomer ratio: 3HB/3HH = 85/15 (mol%/mol%), weight average molecular weight: 300,000)
P-2: PHBH (monomer ratio: 3HB/3HH = 89/11 (mol%/mol%), weight average molecular weight: 300,000).

### (Component (B))

B-1: Rosin-based tackifier ("KR-85" manufactured by Arakawa Chemical Industry, Ltd., 99% to 100% biomass derived)
B-2: Rosinol-based tackifier ("D6011" manufactured by Arakawa Chemical Industry, Ltd., 60% to 70% biomass derived)
B-3: Rosin ester tackifier ("KE311" manufactured by Arakawa Chemical Industry, Ltd., 90% to 100% biomass derived).

### (Component C)

C-1: Carnauba wax ("Carnauba wax No. 1 powder", 100% biomass derived).

### (Component D)

D-1: Glycerin fatty acid ester ("BIOCIZER" manufactured by Riken Vitamin Co. Ltd., 70% biomass derived)
D-2: Epoxidized soybean oil ("E-2000H" manufactured by New Japan Chemical Co., Ltd., 90% biomass derived)

### [Measurement method]

An evaluation method carried out in Examples and Comparative Examples will be described below.

### (Melt viscosity)

A melt viscosity of each composition for a hot melt adhesive was measured using an ARES-G2 rheometer. The measurement temperature ranged from 100° C to 170° C, and a melt viscosity (Pa·s) at a measurement temperature of 150° C was regarded as the melt viscosity of the composition for a hot melt adhesive.

On the basis of the measured melt viscosity, evaluation of the melt viscosity of the composition for a hot melt adhesive was carried out according to the following criteria:
5 (Very good): The melt viscosity is less than 100 Pa·s
4 (Particularly good): The melt viscosity is not less than 100 Pa·s and less than 1,500 Pa·s
3 (Good): The melt viscosity is not less than 1,500 Pa·s and less than 2,500 Pa·s
2 (Acceptable): The melt viscosity is not less than 2,500 Pa·s and less than 5,000 Pa·s
1 (Poor): The melt viscosity is not less than 5,500 Pa·s.

### (Elongation at break)

An elongation at break of the composition for a hot melt adhesive was measured by a tensile test. The specific procedure of the tensile test was as follows: First, the composition for a hot melt adhesive was press molded at 150°C to obtain a 500-pm-thick sheet made of the composition for a hot melt adhesive. From the obtained sheet, a test piece was cut out in a Type 3 dumbbell shape to be used as a sample for the tensile test. The prepared sample was subjected to the tensile test using AG-2000A manufactured by Shimadzu Corporation under the conditions of a measurement temperature of 23°C and a tensile speed of 200 mm/min.

On the basis of the elongation at break (%) measured in the tensile test, evaluation of the elongation at break of the composition for a hot melt adhesive was carried out according to the following criteria:
4 (Particularly good): Elongation at break is more than 400%
3 (Good): Elongation at break is more than 300% and not more than 400%
2 (Acceptable): Elongation at break is more than 200% and not more than 300%
1 (Poor): Elongation at break is not more than 200%.

### [Examples 1 to 22]

The component (A) and, if necessary, the components (C) to (D) were added, with a composition indicated in Table 1 or Table 2, to a measuring mixer and extruder system (Labo-plastomill manufactured by TOYO SEIKI SEISAKU-SHO, LTD.) such that a total amount of the components was 40 g, and the components were mixed at 120° C for 5 minutes to prepare a composition for a hot melt adhesive. A melt viscosity and an elongation at break of the prepared composition for a hot melt adhesive were measured and evaluated. The results are shown in Table 1 or Table 2. In Table 1 and 2, the amount of each component is given in parts by weight.

### [Table 1]

**(Table 1)**

| Composition | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| Component (A) | A-1 | 100 | | | | | | | | | | |
| | A-2 | | 100 | | 100 | 100 | 100 | 100 | 100 | 100 | | 100 |
| | A-3 | | | 100 | | | | | | | 100 | |
| Another resin | P-1 | | | | | | | | | | | |
| | P-2 | | | | | | | | | | | |
| Component (B) | B-1 | | | | 10 | 30 | 50 | 70 | | | | 30 |
| | B-2 | | | | | | | | 30 | | | |
| | B-3 | | | | | | | | | 30 | 30 | |
| Component (C) | C-1 | | | | | | | | | | | 5 |
| Component (D) | D-1 | | | | | | | | | | | |
| | D-2 | | | | | | | | | | | |
| Physical properties | Melt viscosity | 2 | 2 | 4 | 2 | 3 | 3 | 4 | 2 | 3 | 4 | 4 |
| | Elongation at break | 4 | 4 | 4 | 4 | 4 | 4 | 4 | 4 | 4 | 2 | 3 |

### [Table 2]

**(Table 2)**

| Composition | | Example 12 | Example 13 | Example 14 | Example 15 | Example 16 | Example 17 | Example 18 | Example 19 | Example 20 | Example 21 | Example 22 |
|---|---|---|---|---|---|---|---|---|---|---|---|---|
| Component (A) | A-1 | 100 | 100 | | | | | | | | | |
| | A-2 | | | 100 | 100 | 100 | 100 | 100 | 100 | 100 | 100 | 100 |
| | A-3 | | | | | | | | | | | |
| Another resin | P-1 | | | | | | | | | | | |
| | P-2 | | | | | | | | | | | |
| Component (B) | B-1 | | | 30 | 30 | 30 | 30 | 30 | 30 | 50 | 50 | 70 |
| | B-2 | | | | | | | | | | | |
| | B-3 | | | | | | | | | | | |
| Component (C) | C-1 | | | | | 5 | 5 | 7.5 | 10 | 5 | 7.5 | 5 |
| Component (D) | D-1 | 10 | 40 | 7.5 | | 7.5 | | | | | | |
| | D-2 | | | | 10 | | 10 | | | | | |
| Physical properties | Melt viscosity | 3 | 4 | 3 | 4 | 4 | 4 | 5 | 5 | 4 | 5 | 4 |
| | Elongation at break | 4 | 4 | 4 | 4 | 4 | 4 | 4 | 4 | 4 | 4 | 4 |

### [Comparative Examples 1 to 8]

Another resin and, if necessary, the component (B) were added, with a composition indicated in Table 3, to a measuring mixer and extruder system (Labo-plastomill manufactured by TOYO SEIKI SEISAKU-SHO, LTD.) such that a total amount of the components was 40 g, and the components were mixed at 120° C for 5 minutes to prepare a composition for a hot melt adhesive. A melt viscosity and an elongation at break of the prepared composition for a hot melt adhesive were measured and evaluated. The results are shown in Table 3. In Table 3, the amount of each component is given in parts by weight.

### [Table 3]

**(Table 3)**

| Composition | | Comp. Example 1 | Comp. Example 2 | Comp. Example 3 | Comp. Example 4 | Comp. Example 5 | Comp. Example 6 | Comp. Example 7 | Comp. Example 8 |
|---|---|---|---|---|---|---|---|---|---|
| Component (A) | A-1 | | | | | | | | |
| | A-2 | | | | | | | | |
| | A-3 | | | | | | | | |
| Another resin | P-1 | 100 | | 100 | 100 | 100 | | | |
| | P-2 | | 100 | | | | 100 | 100 | 100 |
| Component (B) | B-1 | | | 30 | | | 30 | | |
| | B-2 | | | | 30 | | | 30 | |
| | B-3 | | | | | 30 | | | 30 |
| Component (C) | C-1 | | | | | | | | |
| Component (D) | D-1 | | | | | | | | |
| | D-2 | | | | | | | | |
| Physical properties | Melt viscosity | 1 | 1 | 4 | 2 | 1 | 4 | 2 | 3 |
| | Elongation at break | 1 | 1 | 1 | 1 | 1 | 1 | 1 | 1 |

As is clear from Tables 1 and 2, compositions for a hot melt adhesive of Examples 1 to 22, each of which contained a P3HA-based resin (A-1 to A-3) in which a content of a 3HB unit was not less than 50 mol% and a content of an amorphous hydroxyalkanoate unit (3HH unit) was not less than 24 mol%, had a low melt viscosity and an excellent elongation at break, despite being P3HA-based resin-containing compositions.

In contrast, as shown by Table 3, the compositions for a hot melt adhesive of Comparative Examples 1 and 2, each of which had a P3HA-based resin (P-1 to P-2) in which a content of an amorphous hydroxyalkanoate unit (3HH unit) was less than 24 mol%, had a high melt viscosity and a poor elongation at break. Further, Comparative Examples 3 to 8 show that in a case where a P3HA-based resin in which a content of an amorphous hydroxyalkanoate unit was less than 24 mol% was used, it was not possible to achieve both a low melt viscosity and an excellent elongation at break, even if a tackifier was added.

### Industrial Applicability

According to an embodiment of the present invention, it is possible to provide a composition for a hot melt adhesive which composition contains a P3HA-based resin and has a low melt viscosity and an excellent elongation at break. The composition for a hot melt adhesive can be suitably used for assembling hygienic materials, sealing cardboard boxes, sealing cartons (paper boxes), and the like.

## Claims

1. A composition for a hot melt adhesive, comprising a poly(3-hydroxyalkanoate)-based resin (A) in which a content of a poly(3-hydroxybutyrate) unit is not less than 50 mol% and a content of an amorphous hydroxyalkanoate unit is not less than 24 mol%.

2. The composition as set forth in claim 1, wherein the amorphous hydroxyalkanoate unit is a 3-hydroxyhexanoate unit.

3. The composition as set forth in claim 1 or 2, wherein the poly(3-hydroxyalkanoate)-based resin (A) is poly(3-hydroxybutyrate-co-3-hydroxyhexanoate).

4. The composition as set forth in claim 1 or 2, wherein the poly(3-hydroxyalkanoate)-based resin (A) has a weight average molecular weight of 20,000 to 1,000,000.

5. The composition as set forth in claim 1 or 2, further comprising a tackifier (B).

6. The composition as set forth in claim 5, wherein the tackifier (B) is a rosin-based tackifier.

7. The composition as set forth in claim 5, wherein the tackifier (B) is contained in an amount of not more than 70 parts by weight with respect to 100 parts by weight of the poly(3-hydroxyalkanoate)-based resin (A).

8. The composition as set forth in claim 1 or 2, further comprising a wax (C).

9. The composition as set forth in claim 8, wherein the wax (C) is contained in an amount of not more than 50 parts by weight with respect to 100 parts by weight of the poly(3-hydroxyalkanoate)-based resin (A).

10. The composition as set forth in claim 1 or 2, further comprising a plasticizer (D).

11. The composition as set forth in claim 10, wherein the plasticizer (D) is contained in an amount of not more than 50 parts by weight with respect to 100 parts by weight of the poly(3-hydroxyalkanoate)-based resin (A).

12. A laminated body, comprising:
a first base material;
an adhesive layer consisting of a composition for a hot melt adhesive recited in claim 1 or 2; and
a second base material,
the first base material, the adhesive layer, and the second base material being stacked in this order.

13. A method for producing a laminated body,
the method comprising:
a coating step of melting a composition for a hot melt adhesive recited in claim 1 or 2 under heating and coating a first base material with the composition;
an affixation step of affixing a surface of the first base material and a second base material to each other, the surface being obtained by the coating step and coated with the composition; and
a bonding step of, after the affixation step, cooling the composition to bond the first base material and the second base material to each other.
